# EUROPÄISCHE PATENTSCHRIFT

(11) **EP 3 421 841 B1**
(45) Veröffentlichungstag und Bekanntmachung des Hinweises auf die Patenterteilung: **15.01.2020**
(21) Anmeldenummer: 17177773.3
(22) Anmeldetag: 26.06.2017
(51) Int. Cl.: F16H 57/00

(54) **GETRIEBE**
GEARBOX
TRANSMISSION

(43) Veröffentlichungstag der Anmeldung: 02.01.2019
(73) Patentinhaber: Flender GmbH, 46395 Bocholt (DE)
(72) Erfinder: Gettler, Ralf, 46325 Borken (DE)
(74) Vertreter: Maier, Daniel Oliver

(56) Entgegenhaltungen:
- EP-A2- 1 298 354
- DE-A1-102009 054 595
- US-A1- 2002 029 646

## Beschreibung

Die vorliegende Erfindung betrifft ein Getriebe umfassend ein Gehäuse, eine in dem Gehäuse angeordnete Welle, ein auf einem ersten Wellenabsatz angeordnetes Zahnrad, eine erste Axialsicherung, die auf einer ersten Seite des Zahnrads angeordnet ist und dieses axial sichert, eine zweite Axialsicherung, die auf der anderen Seite des Zahnrads auf einem zweiten Wellenabsatz befestigt ist und dieses axial sichert, wobei der Durchmesser des zweiten Wellenabsatzes kleiner als der Durchmesser des ersten Wellenabsatzes ist, eine die Welle in dem Gehäuse lagernde Radial-Axial-Gleitlagereinheit, die auf einem benachbart zum zweiten Wellenabsatz vorgesehenen dritten Wellenabsatz befestigt ist, dessen Durchmesser kleiner als der Durchmesser des zweiten Wellenabsatzes ist, und zumindest ein weiteres an der Welle befestigtes Bauteil, das eine Gleitfläche für das Axialgleitlager der Radial-Axial-Gleitlagereinheit definiert.

Getriebe der eingangs genannten Art sind im Stand der Technik bereits bekannt. Sie umfassen ein Gehäuse und eine in diesem gelagerte Welle. An einem ersten Wellenabsatz ist ein Zahnrad befestigt, beispielsweise in Form eines Stirnrades. Die Befestigung kann beispielsweise über einen Pressverband, eine Nut-Feder-Verbindung oder dergleichen erfolgen. Zur axialen Sicherung des Zahnrads sind an der Welle eine erste Axialsicherung und eine zweite Axialsicherung vorgesehen, die das Zahnrad zwischen sich aufnehmen. Die erste Axialsicherung kann beispielsweise durch einen vierten Wellenabsatz gebildet sein, dessen Durchmesser größer als der Durchmesser des das Zahnrad aufnehmenden ersten Wellenabsatzes ist. Als zweite Axialsicherung wird meist eine so genannte Nutmutter verwendet, die auf den zweiten Wellenabsatz aufgeschraubt ist und gegen das Zahnrad drückt. DIN 981 unterscheidet verschiedene Bauformen solcher Nutmuttern. Benachbart aber beabstandet zur zweiten Axialsicherung ist zur radialen und axialen Lagerung der Welle eine Radial-Axial-Gleitlagereinheit an dem dritten Wellenabsatz befestigt. Das Axialgleitlager dieser Radial-Axial-Gleitlagereinheit benötigt beidseitig Laufflächen. In diesem Zusammenhang sind zwei Bauformen geläufig.

Bei der ersten Bauform ist die Radial-Axial-Gleitlagereinheit an ihrer zur ersten Axialsicherung weisenden Stirnseite mit einer sich ausgehend von ihrem Innendurchmesser erstreckenden ringförmigen Aussparung versehen, die es ermöglicht, die Radial-Axial-Gleitlagereinheit derart über die Nutmutter zu schieben, dass die Stirnseite des Zahnrads eine Lauffläche für das Axialgleitlager der Radial-Axial-Gleitlagereinheit bildet. Die andere Lauffläche bildet eine Axiallager-Stützscheibe, die meist am stirnseitigen Ende der Welle befestigt ist. Diese weist einen ringförmigen und axial vorstehenden Absatz auf, der an der dem Zahnrad abgewandten Stirnseite der Radial-Axial-Gleitlagereinheit die Lauffläche bildet.

Bei der zweiten Bauform wird zwischen der zweiten Axialsicherung und der Radial-Axial-Gleitlagereinheit eine weitere Stützscheibe auf den dritten Wellenabsatz aufgeschoben, die einerseits an der zugewandten Stirnseite des zweiten Wellenabsatzes anliegt und andererseits an der Stirnseite der Radial-Axial-Gleitlagereinheit eine Lauffläche für das Axialgleitlager der Radial-Axial-Gleitlagereinheit bildet. Entsprechend ist die Radial-Axial-Gleitlagereinheit ohne die ringförmige Aussparung ausgeführt. Der übrige Aufbau entspricht dem der ersten Bauform.

Bei der ersten Bauform wird es als nachteilig angesehen, dass die Herstellung der Radial-Axial-Gleitlagereinheit aufgrund der ringförmigen Ausnehmung teuer ist. Zudem zieht die ringförmige Ausnehmung auch größere Abmessungen als vergleichbare Radial-Axial-Gleitlagereinheiten ohne eine solche Ausnehmung nach sich, was in vielen Fällen nicht wünschenswert ist. Die zweite Bauform ist dahingehend von Nachteil, dass die Stützscheibe ein zusätzliches Element bildet, das zu fertigen und zu montieren ist, was zu größerem Aufwand verbunden ist und auch mit erhöhten Kosten einhergeht.

Ausgehend von diesem Stand der Technik ist es eine Aufgabe der vorliegenden Erfindung, ein Getriebe der eingangs genannten Art mit einem alternativen Aufbau zu schaffen, der die zuvor beschriebenen Nachteile zumindest teilweise beseitigt.

Zur Lösung dieser Aufgabe schafft die vorliegende Erfindung ein Getriebe der eingangs genannten Art, das dadurch gekennzeichnet ist, dass die zweite Axialsicherung derart ausgebildet und angeordnet ist, dass sie eine Lauffläche für das Axialgleitlager der Radial-Axial-Gleitlagereinheit definiert. Mit anderen Worten liegt die zweite Axialsicherung, die vorteilhaft einteilig ausgebildet ist, erfindungsgemäß mit ihren Stirnseiten sowohl an dem Zahnrad als auch an der Radial-Axial-Gleitlagereinheit an. Dank einer solchen erfindungsgemäßen zweiten Axialsicherung erübrigen sich Sonderbauformen der Radial-Axial-Gleitlagereinheit ebenso wie der Einsatz einer zusätzlichen, zwischen der zweiten Axialsicherung und der Radial-Axial-Gleitlagereinheit auf der Welle anzuordnenden Stützscheibe zur Bildung einer Gleitfläche, was zu einem einfachen, preiswerten und platzsparenden Aufbau des erfindungsgemäßen Getriebes führt.

Gemäß einer Ausgestaltung der vorliegenden Erfindung ist das Zahnrad über einen Kegelpressverband an der Welle befestigt. Auf diese Weise wird eine gute und sichere Befestigung des Zahnrads an der Welle sichergestellt.

Die erste Axialsicherung ist bevorzugt durch einen vierten Wellenabsatz gebildet, dessen Durchmesser größer als der Durchmesser des ersten Wellenabsatzes ist. Entsprechend verringert sich die Gesamtanzahl der Einzelteile des erfindungsgemäßen Getriebes.

Vorteilhaft ist die zweite Axialsicherung ein ringförmiges Bauteil, das insbesondere über geeignete Gewinde auf den zweiten Wellenabsatz aufgeschraubt und bevorzugt mit Werkzeugaufnahmevertiefungen zur Aufnahme eines Dreh- bzw. Schraubwerkzeugs versehen ist. Mit anderen Worten folgt die Befestigung der zweiten Axialsicherung an der Welle vorteilhaft wie bei einer herkömmlichen Nutmutter, wodurch eine einfache Montage sichergestellt ist.

Gemäß einer Ausführungsform der vorliegenden Erfindung ist eine zur Radial-Axial-Gleitlagereinheit weisende Stirnfläche der zweiten Axialsicherung derart dimensioniert, dass es für das Axialgleitlager der Radial-Axial-Gleitlagereinheit eine vollständige Lauffläche bildet.

Bevorzugt ist eine weitere Lauffläche für das Axialgleitlager der Radial-Axial-Gleitlagereinheit durch eine am stirnseitigen Ende der Welle befestigte Axiallager-Stützscheibe gebildet, die einen ringförmigen, axial vorstehenden Absatz aufweist, der an der der zweiten Axialsicherung abgewandten Stirnseite der Radial-Axial-Gleitlagereinheit die Gleitfläche definiert.

Vorteilhaft ist ein am Gehäuse befestigter Gehäusedeckel vorgesehen, der die Radial-Axial-Gleitlagereinheit in Richtung des Zahnrads gegen einen Gehäuseabsatz positioniert, wodurch eine axiale Sicherung des radial äußeren Endes der Radial-Axial-Gleitlagereinheit realisiert wird.

Gemäß einer Ausgestaltung der vorliegenden Erfindung ist das Zahnrad ein Stirnrad.

Weitere Merkmale und Vorteile der vorliegenden Erfindung werden anhand der nachfolgenden Beschreibung eines Getriebes gemäß einer Ausführungsform der vorliegenden Erfindung unter Bezugnahme auf die beiliegende Zeichnung deutlich. Darin ist
- FIG 1: eine schematische Teilschnittansicht einer ersten Bauform eines bekannten Getriebes;
- FIG 2: eine schematische Teilschnittansicht einer zweiten Bauform eines bekannten Getriebes; und
- FIG 3: eine schematische Teilschnittansicht eines Getriebes gemäß einer Ausführungsform der vorliegenden Erfindung.

Gleiche Bezugsziffern beziehen sich nachfolgend auf funktionsgleiche oder gleichartig ausgebildete Bauteile.

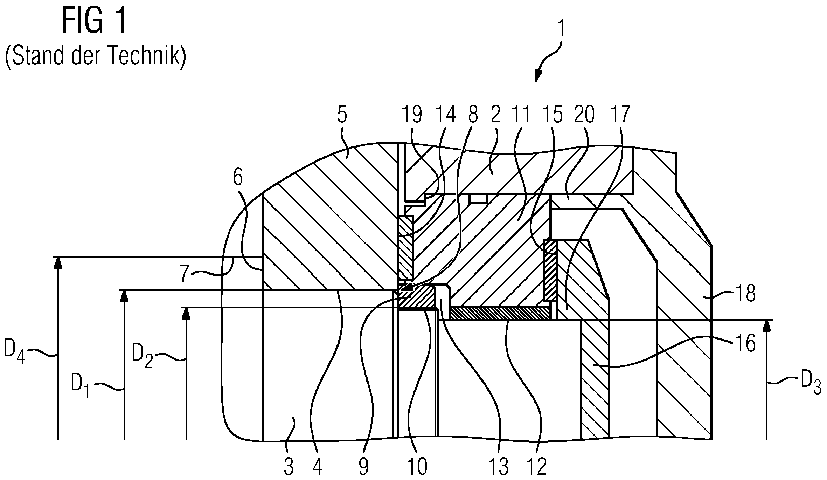

FIG 1 zeigt eine erste Bauform eines bekannten Getriebes 1, das ein Gehäuse 2 und eine in dem Gehäuse 2 angeordnete Welle 3 aufweist. Auf einem ersten Wellenabsatz 4, der einen Durchmesser D₁ aufweist, ist über einen Pressverband ein Zahnrad 5 befestigt, bei dem es sich vorliegend um ein Stirnrad handelt. Zur axialen Sicherung des Zahnrads 5 sind zwei Axialsicherungen vorgesehen. Die erste Axialsicherung 6 bildet ein vierter Wellenabsatz 7 mit einem Durchmesser D₄, der größer als der Durchmesser D₁ des ersten Wellenabsatzes 4 ist. Bei der zweiten Axialsicherung 8 handelt es sich um eine handelsübliche Nutmutter 9, die auf einen benachbart zum ersten Wellenabsatz 4 angeordneten zweiten Wellenabsatz 10 geschraubt ist. Ferner umfasst das Getriebe 1 eine die Welle 3 in dem Gehäuse 2 lagernde Radial-Axial-Gleitlagereinheit 11, die auf einem benachbart zum zweiten Wellenabsatz 10 vorgesehenen dritten Wellenabsatz 12 befestigt ist, dessen Durchmesser D₃ kleiner als der Durchmesser D₂ des zweiten Wellenabsatzes 10 ist. Die Radial-Axial-Gleitlagereinheit 11 weist eine sich ausgehend von ihrem Innendurchmesser erstreckende ringförmige Aussparung 13 auf, die es ermöglicht, die Radial-Axial-Gleitlagereinheit 11 derart über die Nutmutter 9 zu schieben, dass die der Radial-Axial-Gleitlagereinheit 11 zugewandte Stirnfläche des Zahnrads 5 eine Lauffläche 14 für das Axialgleitlager der Radial-Axial-Gleitlagereinheit 11 bildet. Die andere Lauffläche 15 definiert eine Axiallager-Stützscheibe 16, die vorliegend am stirnseitigen Ende der Welle 3 befestigt ist. Die Axiallager-Stützscheibe 16 weist einen ringförmigen und axial vorstehenden Absatz 17 auf, der an der dem Zahnrad 5 abgewandten Stirnseite der Radial-Axial-Gleitlagereinheit 11 anliegt und die Lauffläche 15 bildet. Das Gehäuse 2 umfasst einen an diesem befestigten Gehäusedeckel 18, der die Radial-Axial-Gleitlagereinheit 11 in Richtung des Zahnrads 5 gegen einen Gehäuseabsatz 19 positioniert. Hierzu ist der Gehäusedeckel 16 in bekannter Weise mit einem ringförmigen, axial vorstehenden Vorsprung 20 versehen, der gegen den radial äußeren Bereich der Radial-Axial-Gleitlagereinheit 11 positioniert.

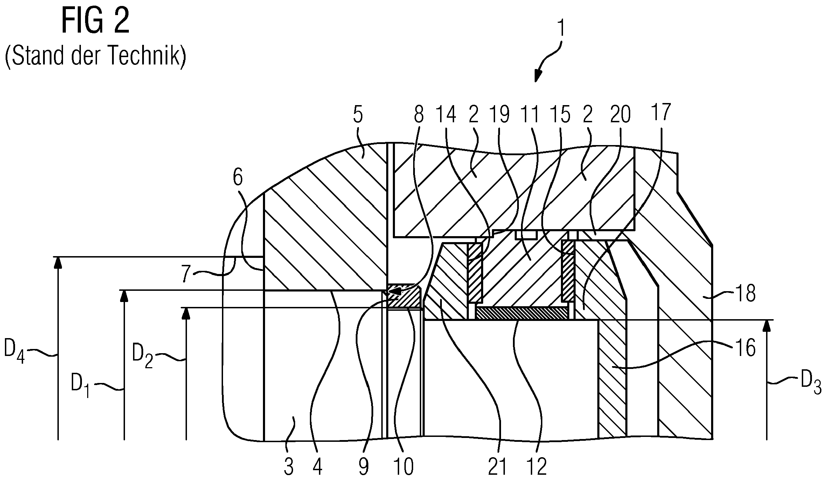

FIG 2 zeigt eine zweite Bauform eines bekannten Getriebes 1, das sich zum einen dahingehend von der ersten Bauform gemäß Figur 1 unterscheidet, dass die Radial-Axial-Gleitlagereinheit 11 nicht mit der ringförmigen Aussparung 13 versehen ist. Zum anderen ist vorliegend eine weitere Stützscheibe 21 auf den dritten Wellenabsatz 12 aufgeschoben, die einerseits an der zugewandten Stirnseite des zweiten Wellenabsatzes 10 anliegt und andererseits an der Stirnseite der Radial-Axial-Gleitlagereinheit 11 die Lauffläche 14 für das Axialgleitlager der Radial-Axial-Gleitlagereinheit 11 bildet. Im Übrigen entsprechen die in den Figuren 1 und 2 dargestellten Bauformen einander.

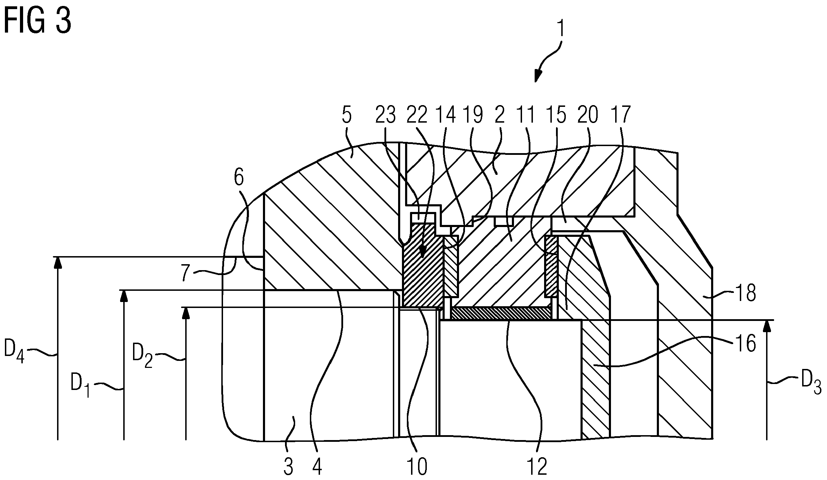

FIG 3 zeigt ein Getriebe 1 gemäß einer Ausführungsform der vorliegenden Erfindung. Das Getriebe 1 umfasst ein Gehäuse 2 sowie eine in diesem angeordnete Welle 3. Ein auf einem ersten Wellenabsatz 4 über einen Kegelpressverbund befestigtes Zahnrad 5, bei dem es sich vorliegend um ein Stirnrad handelt, ist beidseitig jeweils durch eine Axialsicherung 6, 22 gegen axiales Verschieben gesichert. Die erste Axialsicherung 6 bildet vorliegend ein vierter Wellenabsatz 7, dessen Durchmesser D₄ größer als der Durchmesser D₁ des ersten Wellenabsatzes 4 ist. Die zweite Axialsicherung 22 ist vorliegend als ringförmiges Bauteil ausgeführt, das über geeignete Gewinde auf einem zweiten Wellenabsatz 8 aufgeschraubt ist, dessen Durchmesser D₂ kleiner als der Durchmesser D₁ des ersten Wellenabsatzes 4 ist. Hierzu ist die zweite Axialsicherung 22 mit Werkzeugvertiefungen 23 zur Aufnahme eines nicht näher dargestellten Dreh- bzw. Schraubwerkzeugs versehen. Die Werkzeugaufnahmevertiefungen 23 sind vorliegend analog zu Nutmutter-Nuten am Außenumfang der zweiten Axialsicherung 22 vorgesehen. Alternativ können aber auch axiale oder radiale Bohrungen, Polygone oder dergleichen vorgesehen sein, um nur einige Beispiele zu nennen. Die zum Zahnrad 5 weisende Stirnfläche der zweiten Axialsicherung bildet eine Anschlagfläche für das Zahnrad 5. Die zur Radial-Axial-Gleitlagereinheit 11 weisende Stirnfläche der zweiten Axialsicherung 20 ist derart dimensioniert, dass das zugewandte Axialgleitlager einer unmittelbar benachbart angeordneten Radial-Axial-Gleitlagereinheit 11 vollständig an dieser anliegt. Somit definiert diese Stirnfläche eine Lauffläche 14 für das Axialgleitlager der Radial-Axial-Gleitlagereinheit 11. Die Radial-Axial-Gleitlagereinheit 11 ist auf einem dritten Wellenabsatz 12 angeordnet, dessen Durchmesser D₃ kleiner als der Durchmesser D₂ des zweiten Wellenabsatzes 10 ist. Eine weitere Lauffläche 15 für das Axialgleitlager der Radial-Axial-Gleitlagereinheit 11 ist vorliegend durch ein weiteres an der Welle 3 befestigtes Bauteil gebildet, vorliegend durch eine am stirnseitigen Ende der Welle 3 befestigte Axiallager-Stützscheibe 16, die einen ringförmigen, axial vorstehenden Absatz 17 aufweist, der an der der zweiten Axialsicherung 22 abgewandten Stirnseite der Radial-Axial-Gleitlagereinheit 11 anliegt und die Gleitfläche 15 definiert. An dem Gehäuse 2 ist ein Gehäusedeckel 18 befestigt, der die Radial-Axial-Gleitlagereinheit 11 über einen axial vorstehenden, ringförmig ausgebildeten Vorsprung 20 in bekannter Weise in Richtung des Zahnrads 5 gegen einen Gehäuseabsatz 19 positioniert.

Das in FIG 3 dargestellte Getriebe 1 zeichnet sich gegenüber den in den Figuren 1 und 2 dargestellten bekannten Bauformen insbesondere dadurch aus, dass es dank der Tatsache, dass die zweite Axialsicherung 22 neben der axialen Sicherung des Zahnrads 5 auch die Lauffläche 14 für das Axialgleitlager der Radial-Axial-Gleitlagereinheit 11 definiert, einen preiswerten Aufbau aufgrund weniger Einzelteile aufweist und nur einen geringen Platzbedarf für die Anordnung der Radial-Axial-Gleitlagereinheit 11 hat.

## Patentansprüche

1. Getriebe (1) umfassend ein Gehäuse (2), eine in dem Gehäuse (2) angeordnete Welle (3), mit zumindest einem ersten, zweiten und dritten Wellenabsatz (4, 10, 12) ein auf dem ersten Wellenabsatz (4) angeordnetes Zahnrad (5), eine erste Axialsicherung (6), die auf einer ersten Seite des Zahnrads (5) angeordnet ist und dieses axial sichert, eine zweite Axialsicherung (22), die auf der anderen Seite des Zahnrads (5) auf einem zweiten Wellenabsatz (10) befestigt ist und dieses axial sichert, wobei der Durchmesser (D₂) des zweiten Wellenabsatzes (10) kleiner als der Durchmesser (D₁) des ersten Wellenabsatzes (4) ist, eine die Welle (3) in dem Gehäuse (2) lagernde Radial-Axial-Gleitlagereinheit (11), die auf dem benachbart zum zweiten Wellenabsatz (10) vorgesehenen dritten Wellenabsatz (12) befestigt ist, dessen Durchmesser (D₃) kleiner als der Durchmesser (D₂) des zweiten Wellenabsatzes (10) ist, und zumindest ein weiteres an der Welle (3) befestigtes Bauteil (16), das eine Gleitfläche (15) für das Axialgleitlager der Radial-Axial-Gleitlagereinheit (11) definiert, **dadurch gekennzeichnet, dass** die zweite Axialsicherung (22) derart ausgebildet und angeordnet ist, dass sie eine Lauffläche (14) für das Axialgleitlager der Radial-Axial-Gleitlagereinheit (11) definiert.

2. Getriebe (1) nach Anspruch 1, **dadurch gekennzeichnet, dass** das Zahnrad (5) über einen Kegelpressverband an der Welle (3) befestigt ist.

3. Getriebe (1) nach einem der vorhergehenden Ansprüche, **dadurch gekennzeichnet, dass** die erste Axialsicherung (6) durch einen vierten Wellenabsatz (7) gebildet ist, dessen Durchmesser (D₄) größer als der Durchmesser (D₁) des ersten Wellenabsatzes (4) ist.

4. Getriebe (1) nach einem der vorhergehenden Ansprüche, **dadurch gekennzeichnet, dass** die zweite Axialsicherung (22) ein ringförmiges Bauteil ist, das insbesondere über geeignete Gewinde auf den zweiten Wellenabsatz (10) aufgeschraubt und bevorzugt mit Werkzeugaufnahmevertiefungen (23) zur Aufnahme eines Dreh- bzw. Schraubwerkzeugs versehen ist.

5. Getriebe (1) nach Anspruch 4, **dadurch gekennzeichnet, dass** eine zur Radial-Axial-Gleitlagereinheit (11) weisende Stirnfläche der zweiten Axialsicherung (22) derart dimensioniert ist, dass sie für das zugewandte Axialgleitlager der Radial-Axial-Gleitlagereinheit (11) eine vollständige Gleitfläche bildet.

6. Getriebe (1) nach einem der vorhergehenden Ansprüche, **dadurch gekennzeichnet, dass** eine weitere Lauffläche (15) für das Axialgleitlager der Radial-Axial-Gleitlagereinheit (11) durch eine am stirnseitigen Ende der Welle (3) befestigte Axiallager-Stützscheibe (16) gebildet ist, die einen ringförmigen, axial vorstehenden Absatz (17) aufweist, der an der der zweiten Axialsicherung (22) abgewandten Stirnseite der Radial-Axial-Gleitlagereinheit (11) anliegt und die Gleitfläche (15) definiert.

7. Getriebe (1) nach einem der vorhergehenden Ansprüche, **dadurch gekennzeichnet, dass** ein am Gehäuse (2) befestigter Gehäusedeckel (18) vorgesehen ist, der die Radial-Axial-Gleitlagereinheit (11) in Richtung des Zahnrads (5) gegen einen Gehäuseabsatz (19) positioniert.

8. Getriebe (1) nach einem der vorhergehenden Ansprüche, **dadurch gekennzeichnet, dass** das Zahnrad (5) ein Stirnrad ist.

## Claims

1. Gear train (1) comprising a housing (2), a shaft (3) arranged in the housing (2), having at least a first, second and third shaft shoulder (4, 10, 12), a gear wheel (5) arranged on a first shaft shoulder (4), a first axial lock (6) which is arranged on a first side of the gear wheel (5) and secures it axially, a second axial lock (22) which is attached on the other side of the gear wheel (5) to a second shaft shoulder (10) and secures it axially, wherein the diameter (D₂) of the second shaft shoulder (10) is smaller than the diameter (D₁) of the first shaft shoulder (4), a radial-axial sliding-contact bearing unit (11) which mounts the shaft (3) in the housing (2) and is attached to the third shaft shoulder (12) provided adjacent to the second shaft shoulder (10), the diameter (D₃) of which is smaller than the diameter (D₂) of the second shaft shoulder (10), and at least one further component (16) attached to the shaft (3) which defines a sliding surface (15) for the axial sliding-contact bearing of the radial-axial sliding-contact bearing unit (11), **characterised in that** the second axial lock (22) is designed and arranged such that it defines a running surface (14) for the axial sliding-contact bearing of the radial-axial sliding-contact bearing unit (11).

2. Gear train (1) according to claim 1, **characterised in that** the gear wheel (5) is attached to the shaft (3) via a taper interference fit.

3. Gear train (1) according to one of the preceding claims, **characterised in that** the first axial lock (6) is formed by a fourth shaft shoulder (7), the diameter (D₄) of which is greater than the diameter (D₁) of the first shaft shoulder (4).

4. Gear train (1) according to one of the preceding claims, **characterised in that** the second axial lock (22) is an annular component, which in particular is screwed onto the second shaft shoulder (10) via suitable threads and is preferably provided with tool-receiving depressions (23) for receiving a turning tool or screwdriver tool.

5. Gear train (1) according to claim 4, **characterised in that** an end surface of the second axial lock (22) pointing to the radial-axial sliding-contact bearing unit (11) is dimensioned such that it forms a complete sliding surface for the facing axial sliding-contact bearing of the radial-axial sliding-contact bearing unit (11).

6. Gear train (1) according to one of the preceding claims, **characterised in that** a further running surface (15) for the axial sliding-contact bearing of the radial-axial sliding-contact bearing unit (11) is formed by an axial bearing support disk (16) which is attached to the end-side end of the shaft (3) and has an annular, axially projecting shoulder (17) which abuts the end side of the radial-axial sliding-contact bearing unit (11) facing away from the second axial lock (22) and defines the sliding surface (15).

7. Gear train (1) according to one of the preceding claims, **characterised in that** a housing cover (18) attached to the housing (2) is provided, which positions the radial-axial sliding-contact bearing unit (11) against a housing shoulder (19) in the direction of the gear wheel (5).

8. Gear train (1) according to one of the preceding claims, **characterised in that** the gear wheel (5) is a spur gear.

## Revendications

1. Transmission (1) comprenant une enveloppe (2), un arbre (3) monté dans l'enveloppe (2) et ayant au moins un premier, deuxième et troisième gradins (4, 10, 12) d'arbre, une roue (5) dentée, montée sur le premier gradin (4) d'arbre, une première fixation (6) axiale, qui est disposée d'un premier côté de la roue (5) dentée et fixe celle-ci axialement, une deuxième fixation (22) axiale, qui est fixée de l'autre côté de la roue (5) dentée sur un deuxième gradin (10) d'arbre et qui fixe celle-ci axialement, le diamètre (D₂) du deuxième gradin (10) d'arbre étant plus petit que le diamètre (D₁) du premier gradin (4) d'arbre, une unité (11) de palier lisse radial-axial dans l'enveloppe (2), qui est fixée sur le troisième gradin (12) d'arbre prévu au voisinage du deuxième gradin (10) d'arbre, le diamètre (D₃) du troisième gradin (12) d'arbre étant plus petit que le diamètre (D₂) du deuxième gradin (10) d'arbre, et au moins une autre pièce (16) qui est fixée à l'arbre (3) et qui définit une surface (15) de glissement pour le palier lisse axial de l'unité (11) de palier lisse radial-axial, **caractérisée en ce que** la deuxième fixation (22) axiale est constituée et disposée de manière à définir une surface (14) de roulement pour le palier lisse axial de l'unité (11) de palier lisse radial-axial.

2. Transmission (1) suivant la revendication 1, **caractérisée en ce que** la roue (5) dentée est fixée à l'arbre (3) par un joint à ajustement serré conique.

3. Transmission (1) suivant l'une des revendications précédentes, **caractérisée en ce que** la première fixation (6) axiale est formée d'un quatrième gradin (7) d'arbre, dont le diamètre (D₄) est plus grand que le diamètre (D₁) du premier gradin (4) d'arbre.

4. Transmission (1) suivant l'une des revendications précédentes, **caractérisée en ce que** la deuxième fixation (22) axiale est une pièce de forme annulaire, qui est vissée, notamment par des filetages appropriés, sur le deuxième gradin (10) d'arbre et qui est pourvue, de préférence, de cavités (23) de réception d'outil pour recevoir un outil tournant ou un outil de vissage.

5. Transmission (1) suivant la revendication 4, **caractérisée en ce qu'**une surface frontale, tournée vers l'unité (11) de palier lisse radial-axial, de la deuxième fixation (22) axiale a des dimensions telles qu'elle forme une surface de glissement complète pour le palier lisse axial, tourné vers elle, de l'unité (11) de palier lisse radial-axial.

6. Transmission (1) suivant l'une des revendications précédentes, **caractérisée en ce qu'**une autre surface (15) de roulement du palier lisse axial de l'unité (11) de palier lisse radial-axial est formée par un disque (16) d'appui de palier axial, fixé à un bout du côté frontal de l'arbre (3), disque qui a un épaulement (17) annulaire en saillie axialement, qui s'applique au côté frontal, loin de la deuxième fixation (22) axiale, de l'unité (11) de palier (10) radial-axial et qui définit la surface (15) de glissement.

7. Transmission (1) suivant l'une des revendications précédentes, **caractérisée en ce qu'**il est prévu un couvercle (18) d'enveloppe, qui est fixé à l'enveloppe (2) et qui met l'unité (11) de palier lisse radial-axial en position en direction de la roue (5) dentée contre un épaulement (19) de l'enveloppe.

8. Transmission (1) suivant l'une des revendications précédentes, **caractérisée en ce que** la roue (5) dentée est une roue droite.
